# EUROPÄISCHE PATENTSCHRIFT

(11) **EP 1 427 510 B1**
(45) Veröffentlichungstag und Bekanntmachung des Hinweises auf die Patenterteilung: **29.11.2006**
(21) Anmeldenummer: 02777055.1
(22) Anmeldetag: 10.09.2002
(51) Int. Cl.: B01D 53/14

(54) **VERFAHREN ZUR ENTSCHWEFELUNG VON SAUERGASEN MITTELS OXIDATIONSUNEMPFINDLICHER, AMINOCARBOXYLATHALTIGER KATALYSATOREN**
METHOD FOR DESULPHURISING ACID GASES USING CATALYSTS THAT ARE INSENSITIVE TO OXIDATION AND CONTAIN AMINOCARBOXYLATE
PROCEDE DE DESULFURATION DE GAZ ACIDES AU MOYEN DE CATALYSEURS INSENSIBLES A L'OXYDATION, RENFERMANT DES AMINOCARBOXYLATES

(30) Priorität: 12.09.2001 DE 10144890
(43) Veröffentlichungstag der Anmeldung: 16.06.2004
(73) Patentinhaber: BASF Aktiengesellschaft, 67056 Ludwigshafen (DE)
(72) Erfinder: HESSE, Werner, 67283 Obrigheim (DE); JÄGER, Hans-Ulrich, 67434 Neustadt (DE)
(74) Vertreter: Isenbruck, Günter
(86) Internationale Anmeldenummer: PCT/EP2002/010131
(87) Internationale Veröffentlichungsnummer: WO 2003/022406

(56) Entgegenhaltungen:
- GB-A- 1 543 748
- US-A- 4 528 817
- US-A- 4 758 416
- US-A- 5 783 524

## Beschreibung

Die Erfindung betrifft ein Verfahren zur katalytischen Entfernung von H₂S-Gas aus einem Sauergasstrom in Anwesenheit aminocarboxylathaltiger Katalysatoren, eine Mischung zur Entfernung von H₂S-Gas aus einem Sauergasstrom, wobei die Mischung einen aminocarboxylathaltigen Metallchelatkomplex enthält sowie die Verwendung eines aminocarboxylathaltigen Metallchelatkomplexes zur Entfernung von H₂S-Gas aus einem Sauergasstrom.

Die Anwesenheit von beträchtlichen Mengen H₂S in verschiedenen industriellen sogenannten Sauergasströmen stellt ein großes Umweltproblem dar. Es sind verschiedene Verfahren bekannt, die die Entfernung des H₂S aus den Sauergasen betreffen. Wichtige Verfahren zur Entfernung von H₂S-Gas aus Sauergasen sind die sogenannten Liquid-Redox-Prozesse. Dabei wird das S²⁻-Ion des H₂S in wässriger Lösung zu Elementarschwefel oxidiert und ein Redoxkatalysator reduziert. Eines der ersten nach diesem Prinzip arbeitenden Verfahren ist der Stretford-Prozeß, worin Vanadium-Katalysatoren eingesetzt werden. Da dieser Prozeß hinsichtlich Umweltgesichtspunkten problematisch ist, wird er mehr und mehr von Prozessen abgelöst, in denen ein Redoxkatalysator auf der Basis anderer Metalle eingesetzt wird. Dabei wird in den meisten Verfahren Eisen als Metall eingesetzt. Hierbei fungiert ein löslicher Eisen (III)-Chelatkomplex als Redoxpartner, der bei der Oxidation des S²⁻-Ions zu elementarem Schwefel selbst zu einem Eisen (II)-Chelatkomplex reduziert wird. Die eisenkomplexhaltige Waschlösung wird mit Luftsauerstoff begast, wobei das Eisen (II) wieder zu Eisen (III) oxidiert wird und die Waschlösung so im Kreis gefahren werden kann. In diesem Verfahren ist es wesentlich, daß die Konzentration des Eisenchelatkomplexes in der Lösung hoch genug ist, um effiziente Umsätze zu erreichen. Des weiteren sind Ausfällungen von Eisensalzen in jeder Phase des Verfahrens unerwünscht. Daher wird das Eisenion in komplexierter Form in Lösung gehalten. Üblicherweise verwendet man dazu Aminocarboxylatverbindungen wie Nitrilotriessigsäure (NTA), Ethylendiamintetraessigsäure (EDTA) sowie Hydroxyethylendiamintriessigsäure (HEDTA). Diese Komplexe haben den Nachteil, daß sie während der Regeneration teilweise zersetzt werden.

So betrifft D.McManus et al., Journal of Molecular Catalysis A: Chemical 117 (1997) 289-297 eine Untersuchung der Zersetzungsgeschwindigkeit verschiedener Eisenchelatkomplexe. Es werden Nitrilotriessigsäure (NTA), Ethylendiamintetraessigsäure (EDTA), Iminodiacetat (IDA), Diethylentriaminpentaessigsäure (DTPA) sowie Cyclohexandiamintetraessigsäure (CDTA) bezüglich ihrer Zersetzungsgeschwindigkeiten untersucht und Kriterien zur Ligandauswahl entwickelt.

Eine ähnliche Untersuchung der Zersetzungsgeschwindigkeit verschiedener Metallchelatkatalysatoren wird in Arthur I. Martell et al., Can. J. Chem. Vol. 71, 1993, 1524-1531 offenbart. Die Ergebnisse zeigen, daß sich bei einem Vergleich von HEDTA, EDTA und NTA HEDTA am schnellsten zersetzt, gefolgt von EDTA, während NTA am stabilsten ist.

Dennoch ist die Oxidationsstabilität dieser Komplexe nicht ausreichend. US 5,591,417 betrifft ein verbessertes Oxidations-/Reduktionsverfahren worin Katalysatoren eingesetzt werden, die als Chelatliganden Pyridinphosphonate enthalten. Gemäß US 5,591,419 sind diese Komplexe stabiler gegen eine oxidative Zersetzung des aktiven Metallchelats. Diese Liganden sind jedoch teuer und für technische Anwendungen schwer verfügbar.

Daher besteht weiterer Bedarf nach neuartigen Chelatverbindungen, die folgende Eigenschaften aufweisen:
- Zum einen sollten die Komplexe in kommerziellen Mengen zu moderaten Kosten erhältlich sein. Des weiteren ist keine oder eine geringe Toxizität sowie eine gute Umweltverträglichkeit wünschenswert. So sind beispielsweise EDTA und HEDTA nicht leicht biologisch abbaubar und NTA, welches leicht biologisch abbaubar ist, zeigt Verdachtsmomente für eine toxikologische Bedenklichkeit, insbesondere beim Eisen-NTA.
- Des weiteren ist der Transfer von H₂S-Gas in eine Flüssigphase in einem wässrigen System bei hohen pH-Werten besonders effizient. Die Metall-Chelatkomplexe sollten daher bei pH-Werten bis zu 9 oder höher thermodynamisch stabil sein, um die Ausfällung von Fe(OH)₂ und Fe(OH)₃ zu vermeiden.
- Des weiteren muß die Stabilität des Eisen (II)-Chelatkomplexes groß genug sein, um die Ausfällung von FeS unter leicht alkalischen Bedingungen zu verhindern.
- Weiterhin muß der Stabilitätsunterschied zwischen den Eisen (II)- und Eisen (III)-Chelatkomplexen klein genug sein, so daß eine Reduktion des Eisen (III)-Chelatkomplexes durch H₂S zu Eisen (II)-Chelatkomplexen möglich ist. Wenn der Eisen (III)- Chelatkomplex zu stabil ist, bleibt der Chelatkomplex in der Eisen (III)-Stufe, und es findet keine Oxidation des H₂S statt.
- Des weiteren sollte die Stabilität des Eisen (III)-Chelatkomplexes größer sein als die des Eisen (II)-Chelatkomplexes, damit die Oxidation des Eisen (II)-Chelatkomplexes durch gelösten Sauerstoff die bevorzugte Reaktion bei der Regenerierung ist. Somit sind Chelatkomplexe, die Eisen (II) gegenüber Eisen (III) stabilisieren in diesem Verfahren nicht geeignet.
- Schließlich müssen diese Eisen-Chelatkomplexe stabil gegenüber einer Zersetzung durch Sauerstoff oder daraus in Lösung entstehende Radikale und Ionen sein.

Aufgabe der vorliegenden Erfindung ist es daher, einen Metall-Chelatkomplex bereitzustellen, der die genannten Kriterien, insbesondere die Oxidationsstabilität, erfüllt.

Diese Aufgabe wird gelöst durch ein Verfahren zur katalytischen Entfernung von H₂S-Gas aus einem Sauergasstrom, umfassend:
a) Reduzierung der H₂S-Menge in dem Sauergasstrom durch Umsetzung des H₂S-enthaltenden Sauergasstroms mit einer wässrigen Lösung enthaltend einen Metall-Chelatkomplex, wobei ein Chelatligand der allgemeinen Formel (I) eingesetzt wird 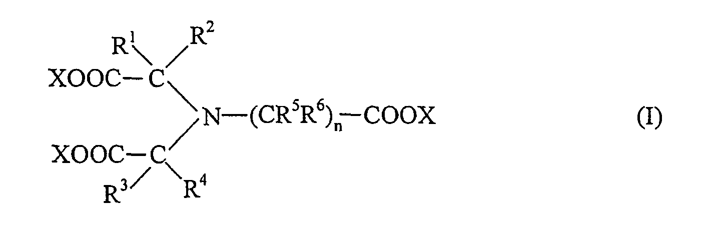 Darin bedeuten:
   X Wasserstoff, Alkalimetall oder NH₄⁺, bevorzugt Wasserstoff oder Natrium, wobei es sich bei dem Chelatliganden der Formel (I) um eine Tricarbonsäure, ein Mono-, Di-oder Trinatriumsalz handeln kann,
   n 1 oder 2
   mindestens einer der Reste R¹ bis R⁶ einen Alkyl-, Aryl-, Aryloxy-, Carboxy-, Alkyloxy- oder Hydroxylrest, wobei die übrigen Reste Wasserstoff sind, und das Metall in dem Metall-Chelatkomplex ein polyvalentes Metall ist, das in mehr als einer Oxidationsstufe vorliegen kann;
   wobei zumindest ein Teil des Metalls nach der Umsetzung des H₂S-enthaltenden Sauergasstroms in einer niedrigeren Oxidationsstufe (reduzierte Form) vorliegt als vor der Umsetzung;
b) Regenerierung der in Schritt a) erhaltenen Mischung enthaltend elementaren Schwefel und den Metall-Chelatkomplex, worin zumindest ein Teil des Metalls in reduzierter Form vorliegt, mit einem Oxidationsmittel, wobei die reduzierte Form des Metalls zu dem Metall in der ursprünglichen Oxidationsstufe oxidiert wird; und
c) Rückführung des regenerierten polyvalenten Metall-Chelatkomplexes in Schritt a);
wobei die Schritte a) und b) in einem einzigen Reaktionsgefäß durchgeführt werden können.

Unter Sauergasstrom sind dabei alle Gasströme zu verstehen, die H₂S als störendes Nebenprodukt enthalten. Solche Gase sind natürlich vorkommendes Erdgas, Synthesegas, Kohlenwasserstoffmischungen aus der Kohlevergasung, Kohlenwasserstoffmischungen aus "hydrotreating" von Petroleumfraktionen, Kohlendioxid, das in der "enhanced" Öl-Gewinnung verwendet wird, Abgase aus der Viskoseproduktion, Abgase aus der Siliciumcarbidproduktion, Abgase aus Anlagen zur Gewinnung von Erdwärme und Abgase, die bei der Abwasserbehandlung anfallen.

Der H₂S-Gehalt im Sauergasstrom kann weit varrieren. Es kann ein Sauergasstrom mit wenigen ppm H₂S eingesetzt werden; der Sauergasstrom kann aber auch H₂S als Hauptbestandteil enthalten.

### a) Reduzierung der H₂S-Menge in dem Sauergasstrom durch Umsetzung mit Metall-Chelatkomplexen

Die erfindungsgemäß eingesetzten Metall-Chelatkomplexe enthalten Chelatliganden, die sich von der Nitrilotriessigsäure ableiten. Es handelt sich dabei um substituierte Nitrilotriessigsäurederivate. In diesen substituierten Nitrilotriessigsäurederivaten der allgemeinen Formel (I) ist mindestens einer der Reste R¹ bis R⁶ ein Alkyl-, Aryl-, Aryloxy-, Carboxy-, Alkyloxy- oder Hydroxylrest und die übrigen Reste sind Wasserstoffatome. Bevorzugt sind einer bis drei der Reste R¹ bis R⁶ entsprechende Reste, besonders bevorzugt ist einer der Reste R¹ bis R⁶ ein entsprechender Rest. Ganz besonders bevorzugt ist lediglich der Rest R⁶ ein Alkyl-, Aryl-, Aryloxy-, Carboxy-, Alkyloxy- oder Hydroxylrest, während die übrigen Reste Wasserstoff sind.

Der mindestens eine der Reste R¹ bis R⁶ ist ein Alkyl-, Aryl-, Aryloxy-, Carboxy-, Alkyloxy- oder Hydroxylrest, bevorzugt ein Alkyl-, Carboxy- oder Hydroxylrest, besonders bevorzugt ein C₁ bis C₆-Alkyl- oder ein Hydroxylrest, ganz besonders bevorzugt ein C₁- bis C₃- Alkylrest und insbesondere ein Methylrest.

n kann 1, 2 oder 3 sein, d.h., zwischen dem Stickstoffatom und einer der Carboxylgruppen befindet sich eine C1- (n=1), C2- (n=2) oder C3- Brücke (n=3). Bevorzugt ist n=1.
Somit wird ganz besonders bevorzugt Methylglycindiessigsäure (MGDA) oder das entsprechende Mono-, Di- oder Trinatriumsalz als Chelatligand eingesetzt.

Es sind auch jedoch Verbindungen geeignet, in denen n=2 ist. Unter diesen Verbindungen ist Isoserindiessigsäure (ISDA) oder das entsprechende Mono-, Di- oder Trinatriumsalz besonders bevorzugt.

Zur Bildung des Metall-Chelatkomplexes geeignete polyvalente Metalle sind im allgemeinen ausgewählt aus Kupfer, Kobalt, Vanadium, Mangan, Platin, Wolfram, Nickel, Quecksilber, Zinn, Blei und Eisen. Bevorzugte geeignete Metalle sind ausgewählt aus Kupfer, Kobalt, Nickel, Mangan und Eisen. Ganz besonders bevorzugt wird Eisen als polyvalentes Metall eingesetzt.

Obwohl sich die erfindungsgemäß eingesetzten Metall-Chelatkomplexe durch eine gegenüber den im Stand der Technik eingesetzten Metall-Chelatkomplexen hohe Oxidationsstabilität auszeichnen, ist es möglich, daß die wässrige Lösung zusätzlich ein Stabilisierungsreagenz enthält. Dabei sind alle üblichen Stabilisierungsreagenzien geeignet. So können beispielsweise Ammoniumthiosulfat, Alkalimetallthiosulfate, Erdalkalimetallthiosulfate, Precurser für Ammoniumthiosulfat und Thiosulfationen eingesetzt werden. Des weiteren sind bestimmte niedermolekulare aliphatische Alkohole geeignet, um die Ausfällung von Substanzen zu vermeiden und die Zersetzung der Metall-Chelatkomplexe zu verzögern oder zu verhindern. Bei diesen niedermolekularen Alkoholen handelt es sich im allgemeinen um Mono-, Di- oder Polyhydroxyalkohole. Bevorzugt sind Hydroxyalkohole mit drei bis acht Kohlenstoffatomen, besonders bevorzugt t-Butanol, iso-Propanol, Ethylenglycol, Propylenglycol und Sorbitol.

Diese Stabilisatorreagenzien können in einer Menge von im allgemeinen 0,1 bis 1,5 mol Stabilisatorreagenz, bevorzugt Alkohol, pro mol Metall-Chelatkomplex, bevorzugt 0,3 bis 1,0 mol Stabilisatorreagenz, bevorzugt Alkohol, pro mol Metall-Chelatkomplex eingesetzt werden.

Bei dem erfindungsgemäßen Verfahren handelt es sich um einen sogenannten Liquid-Redox-Prozeß. Es sind unterschiedliche Verfahrensvarianten des Liquid-Redox-Prozesses bekannt, wobei das erfindungsgemäße Verfahren in allen Verfahrensvarianten eingesetzt werden kann. Die bekanntesten Liquid-Redox-Prozesse sind das Stretford®-Verfahren, in dem Metallkomplexe auf der Basis von Vanadium/Anthrachinon eingesetzt werden, das Takahax®-Verfahren, in dem ebenfalls Vanadium/Anthrachinon-Komplexe eingesetzt werden, das Sulfint®-Verfahren, in dem Eisen-Chelatkomplexe eingesetzt werden, das Sulferox®-Verfahren und das Lo-Cat®-Verfahren, wobei in den beiden letztgenannten ebenfalls Eisen-Chelatkomplexe eingesetzt werden. Da der Einsatz von Eisen-Chelatkomplexen gemäß dem erfindungsgemäßen Verfahren besonders bevorzugt ist, wird das erfindungsgemäße Verfahren bevorzugt in einem Sulfint®-, Sulferox®- oder LoCat®-Verfahren eingesetzt. Diese unterscheiden sich - neben verfahrenstechnischen Unterschieden - insbesondere in der Konzentration des eingesetzten Eisen-Chelatkomplexes.

Das erfindungsgemäße Verfahren kann in einem weiten Konzentrationsbereich der MetallIonen eingesetzt werden. Im allgemeinen beträgt die Metallionenkonzentration in dem erfindungsgemäßen Verfahren 0,001 bis 6 mol/l, bevorzugt 0,001 bis 4 mol/l, besonders bevorzugt 0,001 bis 3 mol/l. Wird Eisen als Metallion eingesetzt, so beträgt die Eisen-Konzentration im Sulfint®-Verfahren etwa 0,001 mol/l, im LoCat®-Verfahren etwa 0,02 mol/l und im Sulferox®-Verfahren 0,01 bis 3 mol/l.

Eine weitere wichtige Größe in den Liquid-Redox-Prozessen zur Entfernung von H₂S-Gas in einem Sauergasstrom in Anwesenheit von Metall-Chelatkomplexen, insbesondere von Eisen-Chelatkomplexen, ist der pH-Wert. Der Transfer von H₂S-Gas in die flüssige Phase ist in wässrigen Systemen bei hohen pH-Werten besonders effizient. Problematisch ist jedoch, daß insbesondere bei hohen pH-Werten die Hydroxide des entsprechenden Metalls, im Falle des Eisens Fe(OH)₂ und besonders Fe(OH)₃, ausfallen. Die Metall-Chelatkomplexe müssen daher insbesondere bei hohen pH-Werten genügend hohe thermodynamische Stabilitäten besitzen. Das erfindungsgemäße Verfahren wird in -wässrigen Lösungen mit einem pH-Wert von im allgemeinen 4 bis 12, bevorzugt von 5 bis 11, besonders bevorzugt von 6 bis 9 durchgeführt. Das heißt, der erfindungsgemäß eingesetzte Metall-Chelatkomplex ist bei pH-Werten von bis zu 12 ausreichend thermodynamisch stabil, so daß die Ausfällung von Metallhydroxiden - gegebenenfalls unter Zusatz von Stabilisatorreagenzien, bevorzugt Alkoholen - verhindert wird. Geeignete Stabilisatorreagenzien wurden bereits vorstehend genannt.

Im Verlauf der Umsetzung in Schritt a) erfolgt aufgrund der sauren Natur des H₂S eine Verminderung des pH-Werts. Der pH-Wert sinkt noch weiter, wenn das eingesetzte Sauergas weitere acidische Spezies, z. B. Kohlendioxid, enthält. Da die Umsetzung jedoch bei hohen pH-Werten effizienter ist als bei niedrigen, ist es bevorzugt, alkalische Materialien zu der wässrigen Reaktionslösung zuzugeben. Geeignete alkalische Materialien sind beispielsweise NaOH, KOH, Ammoniak, Alkalimetallcarbonate oder - bicarbonate. Diese werden dem System im allgemeinen kontinuierlich zugegeben, um die acidischen Komponenten im Reaktionsgemisch zu neutralisieren. Die Zugabe alkalischen Materialien kann in jeder Stufe des erfindungsgemäßen Verfahrens erfolgen. Bevorzugt werden die alkalischen Materialien jedoch in der Regenerierungsstufe in Schritt b) zugegeben.

Die Temperatur in dem erfindungsgemäßen Verfahren ist im allgemeinen nicht wesentlich. Üblicherweise wird das erfindungsgemäße Verfahren bei Temperaturen von 5 bis 100°C, bevorzugt 10 bis 90°C, besonders bevorzugt 20 bis 60°C durchgeführt.

Der Druck ist in den erfindungsgemäßen Verfahren unkritisch. Bevorzugt wird das erfindungsgemäße Verfahren bei Normaldruck durchgeführt.

Die erfindungsgemäß eingesetzten Chelatliganden werden durch geeignete Herstellungsverfahren, z.B. über Strecker-Synthesen hergestellt, die dem Fachmann bekannt sind.

Die erfindungsgemäß eingesetzten Metall-Chelatkomplexe werden im allgemeinen durch Umsetzung der entsprechenden Chelat-Liganden der allgemeinen Formel (I) mit einem geeigneten Metallsalz, Metalloxid oder Hydroxid in wässriger Lösung, ggf. in Anwesenheit von Alkalimetall- oder Ammoniumionen oder durch Umsetzung der entsprechenden Ammonium- oder Alkalirrietallsalze erhalten. Die genauen Reaktionsbedingungen sind dem Fachmann bekannt. Das Verhältnis von Metall zu Chelatligand beträgt im allgemeinen 1 zu 4 bis 2 zu 1, bevorzugt 1 zu 3 bis 1,5 zu 1, besonders bevorzugt 1 zu 2 bis 1,2 zu 1.

Die Kontaktzeiten zwischen dem erfindungsgemäß eingesetzten Metall-Chelatkomplex und dem H₂S-enthaltenden Sauergasstrom in der wässrigen Lösung in Schritt a) können stark variieren. Im allgemeinen liegen die Kontaktzeiten im Bereich von 0,5 sec. bis 120 sec., bevorzugt 1 sec. bis 60 sec., besonders bevorzugt 1 sec. bis 10 sec.

Im allgemeinen werden mehr als 90 Gew.% des H₂S aus dem Sauergasstrom entfernt, bevorzugt mehr als 95 Gew.%, besonders bevorzugt mehr als 99 Gew.%.

### b) Regenerierung der in Schritt a) erhaltenen Mischung

In Schritt b) erfolgt eine Regenerierung der in Schritt a) erhaltenen Mischung enthaltend elementaren Schwefel und den Metall-Chelatkomplex, worin zumindest ein Teil des Metalls in reduzierter Form vorliegt, mit einem Oxidationsmittel, wobei die reduzierte Form des Metalls zu dem Metall in der ursprünglichen Oxidationsstufe oxidiert wird.

Bevorzugt wird die in Schritt a) erhaltene Mischung mit Sauerstoff als Oxidationsmittel in Kontakt gebracht. Der Begriff Sauerstoff beschränkt sich gemäß der vorliegenden Erfindung dabei nicht auf reinen Sauerstoff, sondern umfaßt des weiteren Luft, mit Sauerstoff angereicherte Luft oder andere Sauerstoff enthaltende Gase.

Das Oxidationsmittel wird im allgemeinen in einem stöchiometrischen Verhältnis oder bevorzugt im Überschuß im Verhältnis zu dem in reduzierter Form vorliegenden Metall (in Form des Metall-Komplexes) eingesetzt.

Der Kontakt, der in Schritt a) erhaltenen Mischung mit dem Oxidationsmittel erfolgt in einer bevorzugten Ausführungsform durch Einperlen von Luft in die Chelatlösung, z.B. im Gegenstromverfahren.

Die Temperatur ist in dem Regenerierungsschritt b) des erfindungsgemäßen Verfahrens in einem breiten Bereich variabel. Im allgemeinen wird Schritt b) bei derselben Temperatur wie Schritt a) durchgeführt. Gegebenenfalls ist die Temperatur im Schritt b) geringfügig niedriger. Somit wird Schritt b) im allgemeinen bei Temperaturen von 5 bis 100°C, bevorzugt 10 bis 90°C, besonders bevorzugt 20 bis 60°C durchgeführt.

Auch der Druck im Schritt b) ist im weiten Bereich variabel. Im allgemeinen wird Schritt b) bei Normaldruck durchgeführt.

Auch der pH-Wert entspricht bevorzugt dem in Schritt a) eingestellten pH-Wert. Er beträgt im allgemeinen 4 bis 12, bevorzugt 5 bis 11, besonders bevorzugt 6 bis 9.

Der in Schritt a) entstandene elementare Schwefel wird aus dem Reaktionsgemisch abgetrennt. Die Abtrennung des Schwefels kann sowohl vor als auch nach oder während dem Regenerierungsschritt b) erfolgen. In einer bevorzugten Ausführungsform wird der Schwefel vor oder während dem Regenerierungschritt b) aus der in Schritt a) erhaltenen Mischung abgetrennt. Die Abtrennung des Schwefels kann nach geeigneten, dem Fachmann bekannten Methoden erfolgen. Zum Beispiel ist es möglich, den Schwefel durch Absetzen in dem Reaktor, in dem Schritt a) durchgeführt wird, zu sammeln. Dieser kann dann periodisch aus dem System entfernt werden oder aber kontinuierlich über ein Ventil entnommen werden. Des weiteren ist es möglich, den Schwefel durch Filtration, Flotation, Zentrifugation oder Aufschmelzen und Abtrennen durch Phasentrennung von dem wässrigen System, oder geeignete Vorrichtungen, die dem Fachmann bekannt sind, zu entfernen. Dabei muss nicht unbedingt der gesamte Schwefel entfernt werden. Die nachfolgenden Verfahrensschritte können auch dann durchgeführt werden, wenn ein Rest des Schwefels in der Mischung verbleibt.

Im Anschluß an den Regenerierungsschritt b), in dem die in Schritt a) reduzierte Form des Metalls zu der ursprünglichen Oxidationsstufe des Metalls oxidiert wird, erfolgt die Rückführung des regenerierten polyvalenten Metall-Chelatkomplexes in Schritt a).

### c) Rückführung des regenerierten polyvalenten Metall-Chelatkomplexes in Schritt a)

Vor der Rückführung wird im allgemeinen das überschüssige Oxidationsmittel, bevorzugt überschüssige Luft, aus der Mischung mit einer dem Fachmann bekannten Methode entfernt. Die regenerierte und von dem überschüssigen Oxidationsmittel befreite Lösung wird in Schritt a) zurückgeführt. Dabei beträgt das Verhältnis von der reduzierten Form des Metalls zu der Form des Metalls in der ursprünglichen Oxidationsstufe im allgemeinen 1 zu 10 bis 1 zu 1000, bevorzugt 1 zu 50 bis 1 zu 1000.

### d) Geeignete Vorrichtungen

Im allgemeinen kann jedes aus dem Stand der Technik bekannte Verfahren, das einen intensiven Kontakt zwischen dem H₂S-Gas enthaltenen Sauergas und der wässrigen Metall-Chelatkomplexlösung ermöglicht, eingesetzt werden. Dabei ist eine Durchführung des erfindungsgemäßen Verfahrens sowohl in einem aeroben System möglich, in dem die Oxidation des H₂S und die Regenerierung der Metall-Chelatkomplexlösung im Gegenstsrom in demselben Reaktor durchgeführt werden. Es ist auch eine anaerobe Fahrweise möglich, in dem die Oxidation des H₂S und die Regenerierung der Metall-Chelatkomplexlösung in getrennten Reaktoren oder Reaktionszonen eines Reaktors durchgeführt werden.

Der Reaktor in Schritt a) ist bevorzugt ein Absorber, wobei beliebige geeignete Absorber eingesetzt werden können. Dabei handelt es sich z.B. um statische Mischer, gepackte Säulen, z. B. Waschkolonnen oder Venturis. Geeignete Reaktoren zur Durchführung des Schritts b) sind z.B. gepackte Säulen, Sprühtürme und Reaktoren mit Gaseinperlung.

### e) Weitere Zusätze

Die in den erfindungsgemäßen Verfahren vorliegenden Mischungen können des weiteren weitere Zusätze enthalten, die dem Fachmann bekannt sind. Solche Zusätze sind z.B. Puffersubstanzen, wie Phosphat- oder Carbonatpuffer. Andere Zusätze sind z.B. Natriumoxalat, Natriumformiat, Natriumacetat sowie Additive, die die Abtrennung des Schwefels erleichtern, Antischäumungsmittel und/oder Benetzungsmittel. Des weiteren können die bereits vorstehend angegebenen Stabilisierungsreagenzien zugesetzt werden.

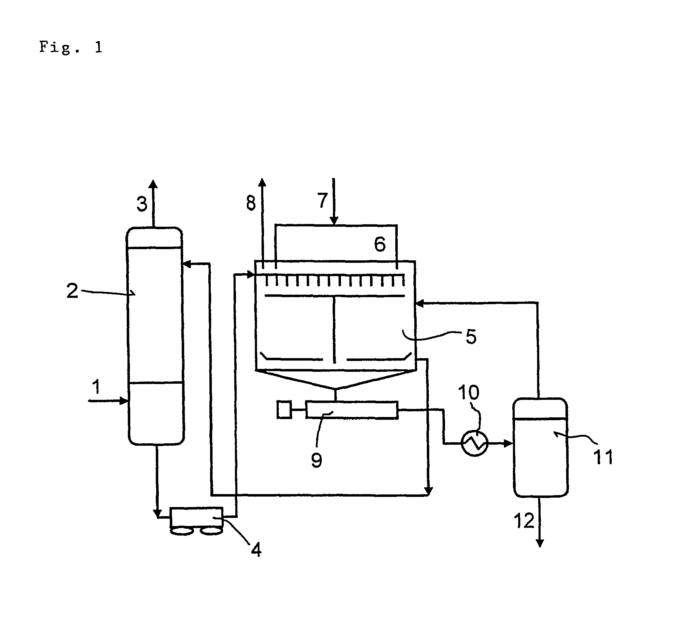

In einer ganz besonders bevorzugten Ausführungsform wird das erfindungsgemäße Verfahren wie folgt, bevorzugt in einer in **Figur 1** dargestellten Vorrichtung, durchgeführt:

In **Figur 1** bedeuten:
- **1**: H₂S-Gas enthaltender Sauergasstrom
- **2**: Absorber
- **3**: behandeltes H₂S-freies Gas
- **4**: Kühler
- **5**: Regenerationsreaktor
- **6**: Oxidation
- **7**: Luft
- **8**: überschüssige/verbrauchte Luft
- **9**: Schlammpumpe
- **10**: Wärmetauscher
- **11**: Separator
- **12**: flüssiger Schwefel

Ein H₂S-Gas enthaltender Sauergasstrom **1** wird einem Reaktor (Absorber) **2** zugeführt, wo er mit einer wässrigen Lösung des erfindungsgemäßen Metall-Chelatkomplexes in Kontakt gebracht wird. Diese Lösung wird bevorzugt durch Rückführung der im Schritt b) regenerierten Mischung erhalten. Der Gasstrom, der den Reaktor (Absorber) im Schritt a) verläßt, besitzt einen verminderten H₂S-Gehalt bzw. ist H₂S-frei. Es bleibt eine Mischung zurück, die Schwefel (in elementarer Form) und den erfindungsgemäßen Metall-Chelatkomplex enthält, in dem das Metall in reduzierter Form vorliegt. Diese Mischung wird einem weiteren Reaktor **5** bzw. einer weiteren Reaktionszone zugeführt, worin eine Regenerierung (Oxidation **6 ;** Schritt b)) erfolgt. Dazu wird ein Sauerstoff enthaltender Gasstrom, bevorzugt Luft **7,** in den Reaktor geführt, in dem die Regenerierung (Oxidation) erfolgt. Der Schwefel, der sich bevorzugt auf dem Boden des Reaktors absetzt, wird bevorzugt kontinuierlich aus dem Verfahren entfernt, wozu ein Teil der Mischung einer Vorrichtung zur Abtrennung des Schwefels (Separator) **11** zugeführt wird, nachdem der Schwefel bevorzugt in einem Wärmetauscher **10** verflüssigt wurde. Nach Abtrennung des Schwefels wird dieser Teil der Mischung wiederum dem Reaktor, in dem die Regenerierung erfolgt, zugeführt, während der abgetrennte Schwefel **12,** üblicherweise in flüssiger Form, weiterverwendet werden kann. In dem Regenerierungsschritt b) findet die Oxidation **6** der reduzierten Form des Metalls, das in Form des erfindungsgemäßen Metall-Chelatkomplexes vorliegt, durch die Zuführung von Sauerstoff, bevorzugt in Form von Luft **7,** statt. Während der Regenerierung wird ein Überschuß des Sauerstoffs bzw. des Sauerstoff enthaltenden Gases aus dem Reaktor entfernt **8.** Die nun regenerierte Metall-Chelatkomplexlösung wird entsprechend Schritt c) des erfindungsgemäßen Verfahrens in den Reaktor (Absorber), in dem Schritt a) erfolgt, zurückgeführt.

Ein weiterer Gegenstand der vorliegenden Anmeldung ist eine Mischung zur Entfernung von H₂S-Gas aus einem Sauergasstrom, enthaltend mindestens einen Metall-Chelatkomplex, wie er vorstehend bereits beschrieben wurde. Bevorzugt enthält diese Mischung zusätzlich ein Stabilisierungsreagenz. Geeignete Stabilisierungsreagenzien wurden bereits vorstehend beschrieben. Des weiteren können in der erfindungsgemäßen Mischung weitere Zusätze enthalten sein, wobei geeignete Zusätze ebenfalls vorstehend genannt sind.

Diese Mischung wird bevorzugt in einem Verfahren eingesetzt, umfassend die Schritte a), b) und c), wie es vorstehend beschrieben ist.

Ein weiterer Gegenstand der vorliegenden Erfindung ist die Verwendung eines Metall-Chelatkomplexes gemäß der vorliegenden Erfindung, zur Entfernung von H₂S-Gas aus einem Sauergasstrom.

Die nachfolgenden Beispiele erläutern die Erfindung zusätzlich.

### Beispiele

In den nachfolgenden Beispielen wurden die folgenden Metall-Chelatkomplexe eingesetzt:
a) Metall-Chelatkomplex aus Eisen und Methylglycindiessigsäure (MGDA) im Verhältnis zu 1:2 (erfindungsgemäß)
b) Metall-Chelatkomplex aus Eisen und Nitrilotriessigsäure (NTA) im Verhältnis 1:2 (Vergleichsversuch)

### 1. Herstellung der Metall-Chelatkomplexe (allgemeine Arbeitsvorschrift)

In einem Reaktionsgefäß werden 0,036 mol des Natriumsalzes des entsprechenden Chelatkomplexes gelöst in destilliertem Wasser mit 0,018 mol Fe(NO₃)₃ x 9 H₂O versetzt und mit destilliertem Wasser auf 1 1 aufgefüllt. Der pH-Wert wird auf 8,5 eingestellt, je nach Lösung mit verdünnter NaOH bzw. verdünnter HNO₃. Man erhält 1 1 einer Eisen (III)-Chelatkomplexlösung.

### 2. Entfernung von H₂S-Gas aus einer wässrigen Lösung (allgemeine Arbeitsvorschrift)

800 ml der jeweiligen unter 1. hergestellten Lösung werden in ein Reaktionsgefäß überführt und über sich im Kolben befindliche Glasfritte ca. 5 min. mit Stickstoff gespült.

Anschließend wird die jeweilige Versuchslösung, wiederum über die Glasfritte, mit H₂S bei einem Gasstrom von ca. 4 l/h etwa 10 min. begast. Dabei wird der im H₂S enthaltene Schwefel (S²⁻) von dem in dem jeweiligen Eisen-Chelatkomplex enthaltenen Fe³⁺ oxidiert, wobei das Fe³⁺ zu Fe²⁺ reduziert wird und elementarer Schwefel gebildet wird, der sich im Laufe des Versuchs im Reaktionsgefäß anreichert. Anschließend wird die Mischung, wie zu Beginn, ca. 5 min. mit Stickstoff gespült.

Nun wird die Versuchslösung etwa 1 Stunde über die Glasfritte mit Luft bei einem Luftstrom von ca. 80 1/h regeneriert. Der in der Luft enthaltene Sauerstoff oxidiert dabei das nunmehr im Eisen-Chelatkomplex enthaltene Fe²⁺ wiederum Fe³⁺.

Die bisher beschriebene Prozedur ergibt einen Zyklus, der je nach Dauer des Versuchs n-mal wiederholt wird.

Im folgenden sind die Versuchsbedingungen des beschriebenen Verfahrens aufgelistet:
- Temperatur:: Raumtemperatur
- Druck:: Normaldruck
- H₂S-Strom:: ca. 41/h (ca. 10 min. pro Zyklus)
- N₂-Strom:: ca. 4 l/h (ca. 5 min. pro Zyklus)
- Luft-Strom:: ca. 80 l/h (ca. 1 Std. pro Zyklus)
- Rührer:: 400 U/min.
- pH-Wert:: 8,5

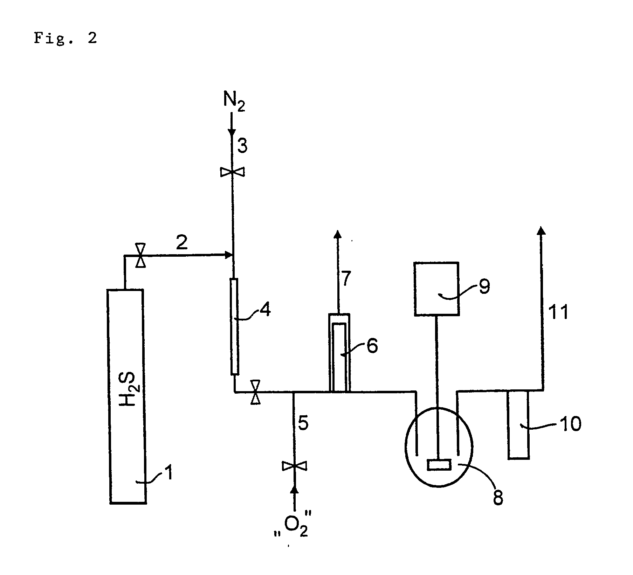

Die anliegende **Figur 2** zeigt schematisch den Aufbau einer Laborapparatur zur Durchführung des erfindungsgemäßen Verfahrens:

Darin bedeuten:
- 1: H₂S-Vorratsflasche
- 2: H₂S-Zuleitung
- 3: N₂-Zuleitung
- 4: Durchflußmesser
- 5: Luftzufuhr
- 6: Überdruckventil
- 7: Abluftableitung
- 8: Reaktionskolben
- 9: Rührer
- 10: Waschflasche
- 11: Abluftableitung

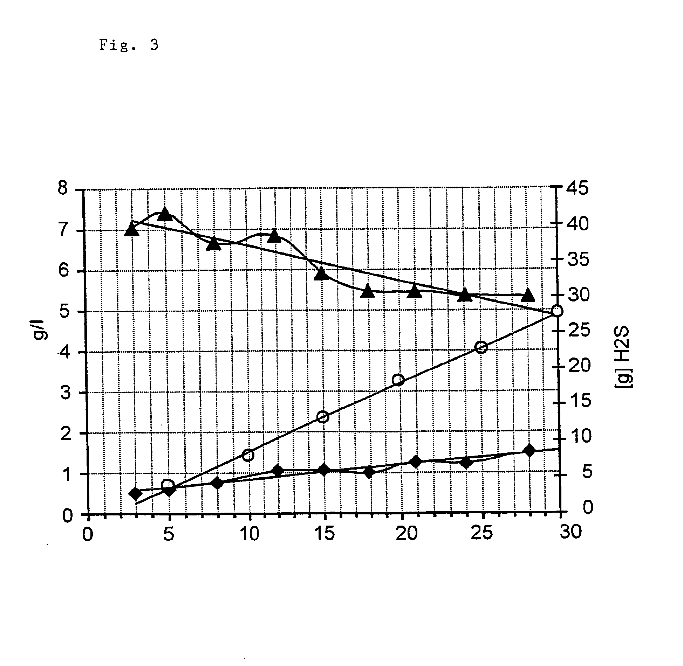

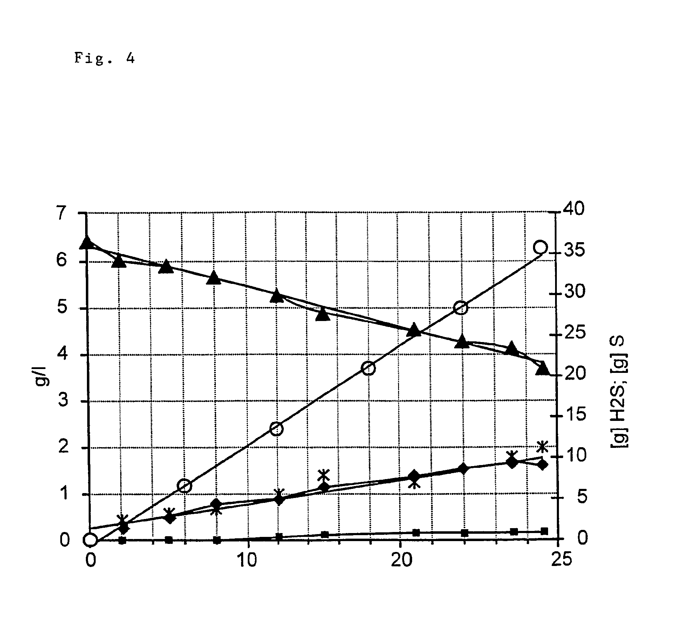

In den folgenden **Figuren 3 und 4** sind die Ergebnisse einer Untersuchung der Zersetzung der jeweiligen Chelatkomplexe und einer Messung der H₂S-Menge in Abhängigkeit von der Anzahl der Zyklen dargestellt.

Dabei zeigt **Figur 3** die Zersetzung des erfindungsgemäßen Eisen-Methylglycindiessigsäure (MGDA)-Komplexes in Abhängigkeit von der Anzahl der Zyklen und **Figur 4** zeigt die Zersetzung des entsprechenden Eisen-Nitrolitriessigsäurekomplexes in Abhängigkeit von der Anzahl der Zyklen (Vergleichsversuch).

Die Zersetzung der jeweiligen Komplexe verläuft nach folgendem Schema:

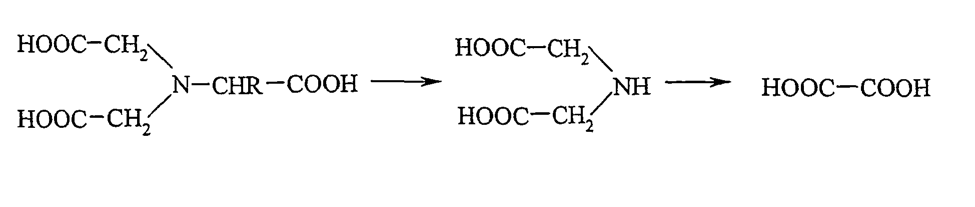

| | | | | |
|---|---|---|---|---|
| a) | R = CH₃ | (MGDA) | Iminodiacetat | Oxalsäure |
| b) R = H | | (NTA) | (IDA) | |

In **Figur 3** stellen die ausgefüllten Dreiecke den Gehalt an Methylglycindiessigsäure (MGDA) in Abhängigkeit von der Anzahl der Zyklen dar. Die ausgefüllten Rauten stellen den Anteil an Imidodiacetat (IDA) in Abhängigkeit von der Anzahl der Zyklen dar, und die leeren Kreise stellen die H₂S-Menge [in g], die bis dahin insgesamt durch die Lösung geleitet wurde, in Abhängigkeit von der Zahl der Zyklen dar.

In **Figur 4** stellen die ausgefüllten Dreiecke die Menge an Nitrolitriessigsäure (NTA) in Abhängigkeit von der Anzahl der Zyklen dar, die ausgefüllten Rauten stellen den Anteil an Imidodiacetat (IDA) in Abhängigkeit von der Anzahl der Zyklen dar, die ausgefüllten Quadrate stellen den Anteil an Oxalsäure in Abhängigkeit von der Anzahl der Zyklen dar, die leeren Kreise stellen die H₂S-Menge [in g], die bis dahin insgesamt durch die Lösung geleitet wurde, in Abhängigkeit von der Zahl der Zyklen dar und die Sternchen stellen den bis dahin in Summe ausgefallenen Schwefel [in g] in Abhängigkeit von der Zahl der Zyklen dar.

Bei einem Vergleich der **Figuren 3** (erfindungsgemäß) und **4** (Vergleichsversuch) erkennt man, daß die Zersetzung von MGDA (erfindungsgemäß) deutlich langsamer erfolgt, als die des NTA (Vergleichsversuch) unter denselben Reaktionsbedingungen. Die Zunahmen der entsprechenden Zersetzungsprodukte verhalten sich jeweils entsprechend der Abnahme der eingesetzten Chelatkomplexverbindungen MGDA bzw. NTA.

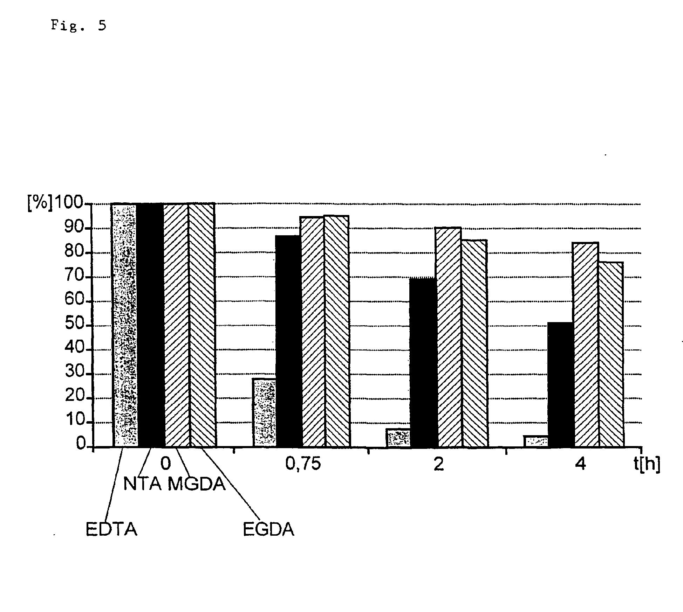

In **Figur 5** ist das Ergebnis einer Untersuchung der Oxidationsstabilität verschiedener in der Sauergasentschwefelung eingesetzter Chelatkomplexe sowie des erfindungsgemäß eingesetzten Chelatkomplexes in Abhängigkeit von der Zeit dargestellt.

Darin ist auf der x-Achse die Zeit in Stunden (h) und auf der y-Achse der Anteil des Chelatkomplexes in % bezogen auf die Einsatzmenge des Chelatkomplexes dargestellt. Die linke Säule stellt die Daten für Ethylendiamintetraessigsäure (EDTA) dar, die zweite Säule von links stellt die Daten für Nitrilotriessigsäure (NTA) dar, die dritte Säule von links stellt die Daten für Methylglycindiessigsäure (MGDA) (erfindungsgemäß) dar und die rechte Säule stellt die Daten für Ethylglycindiessigsäure (EGDA) (erfindungsgemäß) dar.

Die Oxidationsstabilität wurde in wässriger Lösung bei einem pH-Wert von 8,5 und einer Temperatur von 65°C gemessen. In dieser Lösung waren die 0,6% des jeweiligen Komplexbildners, 2% H₂O₂ und 60 ppm Mangan vorhanden.

Es zeigt sich, dass die erfindungsgemäß eingesetzten Komplexe MGDA und EGDA eine größere Oxidationsstabilität gegenüber H₂O₂ aufweisen als die gemäß den Vergleichsbeispielen eingesetzten Komplexe.

## Patentansprüche

1. Verfahren zur katalytischen Entfernung von H₂S-Gas aus einem Sauergasstrom, umfassend:
a) Reduzierung der H₂S-Menge in dem Sauergasstrom durch Umsetzung des H₂S-enthaltenen Sauergasstroms mit einer wässrigen Lösung enthaltend einen Metall-Chelatkomplex, wobei ein Chelatligand der allgemeinen Formel (I) eingesetzt wird 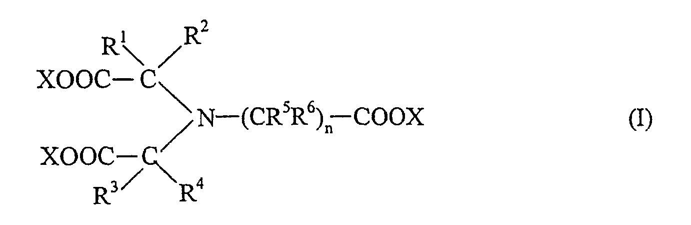 worin
X Wasserstoff, ein Alkalimetall oder NH₄⁺,
n 1,2 oder 3, und
mindestens einer der Reste R¹ bis R⁶ ein Alkyl-, Aryl-, Alkyloxy-, Aryloxy-, Carboxy- oder Hydroxylrest ist und die übrigen Reste Wasserstoff sind, und das Metall in dem Metall-Chelatkomplex ein polyvalentes Metall ist, das in mehr als einer Oxidationsstufe vorliegen kann;
wobei zumindest ein Teil des Metalls nach der Umsetzung mit dem H₂S-enthaltenden Sauergasstrom in einer niedrigeren Oxidationsstufe (reduzierte Form) vorliegt als vor der Umsetzung;
b) Regenerierung der in Schritt a) erhaltenen Mischung enthaltend elementaren Schwefel und den Metall-Chelatkomplex, worin zumindest ein Teil des Metalls in reduzierter Form vorliegt, mit einem Oxidationsmittel, wobei die reduzierte Form des Metalls zu dem Metall in der ursprünglichen Oxidationsstufe oxidiert wird, und
c) Rückführung des regenerierten polyvalenten Metall-Chelatkomplexes in Schritt a);
wobei die Schritte a) und b) in einem einzigen Reaktionsgefäß durchgeführt werden können.

2. Verfahren nach Anspruch 1, daduch **gekennzeichnet**, daß in dem Chelatliganden der allgemeinen Formel (I) der Rest R⁶ ein Alkylrest, Hydroxylrest oder Carboxyrest ist und die Reste R¹ bis R⁵ Wasserstoff sind.

3. Verfahren nach Anspruch 2, **dadurch gekennzeichnet, daß** n 1 ist und R⁶ ein C₁ bis C₃-Alkylrest ist.

4. Verfahren nach Anspruch 2, **dadurch gekennzeichnet, daß** n 2 und R⁶ ein Hydroxylrest ist.

5. Verfahren nach Anspruch 3, **dadurch gekennzeichnet, daß** die Verbindung der Formel (I) Methylglycindiessigsäure oder das entsprechende Mono-, Di- oder Trinatriumsalz ist.

6. Verfahren nach einem der Ansprüche 1 bis 5, **dadurch gekennzeichnet, daß** das Metall ausgewählt ist aus Eisen, Kupfer, Kobalt, Nickel und Mangan.

7. Verfahren nach Anspruch 6, **dadurch gekennzeichnet, daß** das Metall Eisen ist.

8. Verfahren nach einem der Ansprüche 1 bis 7, **dadurch gekennzeichnet, daß** die wässrige Lösung ein Stabilisierungsreagenz enthält.

9. Verfahren nach Anspruch 8, **dadurch gekennzeichnet, daß** das Stabilisierungsreagenz ausgewählt ist aus Ammoniumthiosulfat, Alkalimetallthiosulfat, Erdalkalimetallthiosulfat, Precursorn für Thiosulfationen und Monohydroxy-, Dihydroxy- oder Polyhydroxy-Alkoholen.

10. Mischung zur Entfernung von H₂S-Gas aus einem Sauergasstrom, enthaltend mindestens einen Metall-Chelatkomplex gemäß einem der Ansprüche 1 bis 7.

11. Mischung nach Anspruch 10, **dadurch gekennzeichnet, daß** zusätzlich ein Stabilisierungsreagenz enthalten ist.

12. Verwendung eines Metall-Chelatkomplexes gemäß einem der Ansprüche 1 bis 7 zur Entfernung von H₂S-Gas aus einem Sauergasstrom.

## Claims

1. A process for the catalytic removal of H₂S gas from a sour gas stream comprising:
a) reducing the amount of H₂S in the sour gas stream by reacting the H₂S-containing sour gas stream with an aqueous solution containing a metal chelate complex, a chelate ligand of the general formula (I) being used 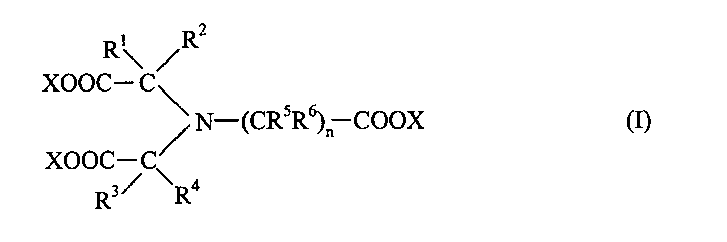 where:
X is hydrogen, an alkali metal or NH₄⁺,
n is 1, 2 or 3, and
at least one of the radicals R¹ to R⁶ is alkyl, aryl, alkyloxy, aryloxy, carboxyl, or hydroxyl, the remaining radicals being hydrogen, and the metal in the metal chelate complex is a polyvalent metal, which can occur in more than one oxidation state;
at least a part of the metal, after reaction of the H₂S-containing sour gas stream, being present in a lower oxidation state (reduced form) than before the reaction;
b) regenerating the mixture obtained in step a) comprising elemental sulfur and the metal chelate complex, in which at least a part of the metal is present in reduced form, with an oxidizing agent, the reduced form of the metal being oxidized to the metal in the original oxidation state; and
c) recirculating the regenerated polyvalent metal chelate complex to step a);
with steps a) and b) being able to be carried out in a single reaction vessel.

2. The process according to claim 1, wherein, in the chelate ligand of the formula (I), the radical R⁶ is alkyl, hydroxyl or carboxy, and the radicals R¹ to R⁵ are hydrogen.

3. The process according to claim 2, wherein n is 1 is and R⁶ is C₁ to C₃ alkyl.

4. The process according to claim 2, wherein n is 2 and R⁶ is hydroxyl.

5. The process according to claim 3, wherein the compound of the formula (I) is methylglycinediacetic acid or the corresponding monosodium, disodium or trisodium salt.

6. The process according to one of claims 1 to 5, wherein the metal is selected from iron, copper, cobalt, nickel and manganese.

7. The process according to claim 6, wherein the metal is iron.

8. The process according to one of claims 1 to 7, wherein the aqueous solution comprises a stabilizer reagent.

9. The process according to claim 8, wherein the stabilizer reagent is selected from ammonium thiosulfate, alkali metal thiosulfate, alkaline earth metal thiosulfate, precursors of thiosulfate ions and monohydric, dihydric or polyhydric alcohols.

10. The mixture for removing H₂S gas from a sour gas stream comprising at least one metal chelate complex according to one of claims 1 to 7.

11. The mixture according to claim 10, wherein stabilizer reagent is additionally present.

12. The use of a metal chelate complex according to one of claims 1 to 7 for removing H₂S gas from a sour gas stream.

## Revendications

1. Procédé d'élimination catalytique de gaz H₂S d'un flux de gaz acide, comprenant les étapes suivantes :
a) la réduction de la quantité de H₂S dans le flux de gaz acide par réaction du flux de gaz acide contenant le H₂S avec une solution aqueuse contenant un complexe chélateur-métal, un ligand chélate de formule générale (I) étant utilisé, 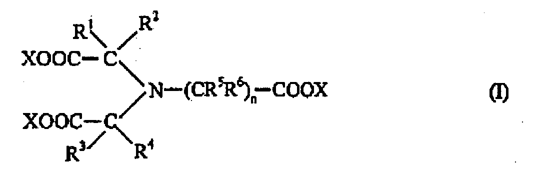 dans laquelle :
X représente l'hydrogène, un métal alcalin ou du NH₄⁺ ;
n est 1, 2 ou 3, et
au moins un des radicaux R¹ à R⁶ est un radical alkyle, aryle, alkyloxy, aryloxy, carboxy ou hydroxyle et les autres radicaux sont l'hydrogène, et
le métal du complexe chélateur-métal est un métal polyvalent qui peut être présent dans plus d'une étape d'oxydation;
au moins une partie du métal étant présent après la réaction avec le flux de gaz acide contenant le H₂S dans une étape d'oxydation plus faible (forme réduite) qu'avant la réaction;
b) régénération du mélange obtenu à l'étape a) contenant du soufre élémentaire et le complexe chélateur-métal, lors de laquelle au moins une partie du métal est présent sous forme réduite, avec l'agent d'oxydation, la forme réduite du métal étant oxydée en le métal lors de l'étape d'oxydation initiale, et
c) recyclage du complexe chélateur-métal polyvalent régénéré à l'étape a);
les étapes a) et b) pouvant être exécutées dans un seul récipient réactionnel.

2. Procédé selon la revendication 1, **caractérisé en ce que**, dans le ligand chélateur de formule générale (I), le radical R⁶ est un radical alkyle, un radical hydroxyle ou un radical carboxy et les radicaux R¹ à R⁵ sont l'hydrogène.

3. Procédé selon la revendication 2, **caractérisé en ce que** n est 1 et R⁶ est un radical alkyle en C₁-C₃.

4. Procédé selon la revendication 2, **caractérisé en ce que** n est 2 et R⁶ est un radical hydroxyle.

5. Procédé selon la revendication 3, **caractérisé en ce que** le composé de formule (I) est l'acide méthylglycinediacétique ou le sel de mono-, di- ou trisodium correspondant.

6. Procédé selon l'une quelconque des revendications 1 à 5, **caractérisé en ce que** le métal est sélectionné parmi les suivants : fer, cuivre, cobalt, nickel et manganèse.

7. Procédé selon la revendication 6, **caractérisé en ce que** le métal est le fer.

8. Procédé selon l'une quelconque des revendications 1 à 7, **caractérisé en ce que** la solution aqueuse contient un réactif de stabilisation.

9. Procédé selon la revendication 8, **caractérisé en ce que** le réactif de stabilisation est sélectionné parmi le thiosulfate d'ammonium, le thiosulfate de métal alcalin, le thiosulfate de métal alcalino-terreux, des précurseurs d'ions thiosulfate et les alcools monohydroxy, dihydroxy ou polyhydroxy.

10. Mélange pour l'élimination de gaz H₂S d'un flux de gaz acide, contenant au moins un complexe chélateur-métal selon l'une des revendications 1 à 7.

11. Mélange selon la revendication 10, **caractérisé en ce qu'**il contient en outre un réactif de stabilisation.

12. Utilisation d'un complexe chélateur-métal selon l'une des revendications 1 à 7 pour l'élimination de gaz H₂S d'un flux de gaz acide.
